# EUROPÄISCHE PATENTSCHRIFT

(11) **EP 0 878 284 B1**
(45) Veröffentlichungstag und Bekanntmachung des Hinweises auf die Patenterteilung: **11.12.2002**
(21) Anmeldenummer: 98107313.3
(22) Anmeldetag: 22.04.1998
(51) Int. Cl.: B29C 44/34

(54) **Verfahren und Vorrichtung zur Herstellung von Polyurethan-Schaum mittels flüssigem Kohlendioxid als Schäummittel**
Method and apparatus for making polyurethane foam with liquid dioxide as blowing agent
Procédé et dispositif pour la production de mousse polyuréthane utilisant du CO2 comme agent moussant

(30) Priorität: 05.05.1997 DE 19718895; 24.09.1997 DE 19742039
(43) Veröffentlichungstag der Anmeldung: 18.11.1998
(73) Patentinhaber: Hennecke GmbH, 51379 Leverkusen (DE)
(72) Erfinder: Sulzbach, Hans-Michael, 53639 Königswinter (DE); Röhrig, Lothar, 53819 Neunkirchen-Seelscheid (DE)
(74) Vertreter: Feldhues, Michael L.F., Dr.

(56) Entgegenhaltungen:
- EP-A- 0 722 975
- US-A- 5 382 603

## Beschreibung

Die Erfindung betrifft Verfahren gemäß den Oberbegriffen der Anprüche 1 und 4, sowie eine Vorrichtung gemäß dem Oberbegriff des Anspruchs 5.

Solche Verfahren and eine solche Vorrichtung sind z.B. aus der WO-A-9600644 bekannt.

Es ist bekannt, Polyurethan-Schaum unter Verwendung von flüssigem Kohlendioxid als Schäummittel durch Zuführung dosierter Isocyanat-, Additiv- und Polyolströme, wobei der Polyolstrom Kohlendioxid gelöst enthält, zu einem Mischaggregat und durch Entspannung der Mischung am Auslass eines Mischaggregates von einem Druck oberhalb des Gleichgewichtlösungsdruckes für das gelöste Kohlendioxid unter Freisetzung des Kohlendioxids und anschließendes Aushärten des erzeugten Flüssigschaumes herzustellen; siehe z. B. EP-A 645 226, WO-A-9600644, WO-A-9602377 und WO-A-9616782. Dabei wird der Kohlendioxid gelöst enthaltende Polyolstrom im allgemeinen dadurch hergestellt, dass flüssiges, auf niedrige Temperatur von beispielsweise -30 bis -5°C gekühltes Kohlendioxid in den bei einem Druck von 30 bis 70 bar gehaltenen Polyolstrom injiziert und anschließend durch einen Statikmischer gedrückt wird, wobei das Kohlendioxid homogen gelöst wird. Vor der Einleitung des Kohlendioxid-haltigen Polyolstroms erfolgt im allgemeinen noch eine Druckherabsetzung auf einen wenig, d.h. beispielsweise 1 bis 3 bar, oberhalb des Gleichgewichtlösungsdruckes liegenden Wert.

US-A-5 382 603 betrifft ein Verfahren zur Polyurethan-Schaumherstellung, bei dem das Schäummittel im Nebenstrom dosiert wird. Dabei wird ein Hochdruck-Mischkopf eingesetzt, bei dem im Einlass für die Polyol-Komponente ein Druck von 100 bar oder mehr herrscht. An die Vermischung im Statikmischer sind keine hohen Anforderungen zu stellen, da im Mischkopf selbst eine hinreichende Nachvermischung erfolgt. Entsprechend ist der Druckabfall im Statikmischer auch bei wechselnder Viskosität des Polyols in Bezug auf die Fördercharakteristik der Pumpen zu vernachlässigen.

In technischen Anlagen zur Polyurethan-Schaumherstellung werden je nach Anforderung des Marktes unterschiedliche Schaumqualitäten hergestellt, die sich durch die Qualität des eingesetzten Polyols und den Kohlendioxidgehalt, d.h. die Dichte des fertigen Schaumes und seine Härte, unterscheiden. Dabei besteht das Polyollager aus mehreren Polyoltanks, in denen unterschiedliche Polyole vorrätig gehalten werden, die sich unter verarbeitungstechnischen Gesichtspunkten insbesondere durch ihre Viskosität unterscheiden. Je nach gewünschter Polyurethan-Schaumqualität werden Mischungen der unterschiedlichen Polyole eingesetzt, die zum Teil auch Füllstoffe enthalten können. Zur Herstellung einer gewünschten Polyolmischung werden mittels aufwendiger Dosierpumpen - in gewissen Grenzen druckunabhängig - im gewünschten Mischungsverhältnis entsprechende Teilmengenströme in eine gemeinsame Leitung, in der die Mischung gebildet wird, gefördert. Der Druckbereich, in dem die Dosierpumpen arbeiten, ist im allgemeinen nicht ausreichend, um den für die Vermischung mit dem flüssigen Kohlendioxid erforderlichen Druck bereitzustellen, außer man würde sehr aufwendige Pumpen einsetzen. Selbst wenn man auf solche aufwendigen Pumpen zurückgreifen würde, die einen ausreichenden Druck für die Vermischung mit dem flüssigen Kohlendioxid erzeugen, müsste der Statikmischer jeweils an die Viskosität der eingesetzten Polyolmischung bzw. an unterschiedliche Polyolgemischmengen angepasst werden, da der Druckabfall über dem Statikmischer stark viskositäts-, vor allem aber auch stark mengenabhängig ist.

Aufgabe der Erfindung ist es, einen dosierten Polyolstrom mit dosiertem Kohlendioxidgehalt, mit variabler Polyolqualität und variabler Durchsatzmenge unter Einsatz von Dosierpumpen zur Verfügung zu stellen, die gegen einen relativ geringen Druck, der für die Vermischung von Polyol und flüssigem Kohlendioxid nicht ausreicht, fördern und wobei ferner ein Austausch des Statikmischers bei wechselnder Polyolqualität (insbesondere mit unterschiedlicher Viskosität und wechselnder Polyolgemischmenge) nicht erforderlich ist.

Gegenstand der Erfindung ist ein Verfahren zur Bereitstellung eines dosierten Polyolstromes mit dosiertem Gehalt an Kohlendioxid gemäß Anspruch 1.

Nach einer vereinfachten Ausführungsform der Erfindung werden die mehreren dosierten Polyolströme in einer gemeinsamen Leitung vereinigt, aus der die Druckerhöhungspumpe einen Teilstrom fördert, wobei dem restliche Polyolstrom mit dem im Statikmischer mit Kohlendioxid vermischten Teilstrom wiedervereinigt wird.

Der den Statikmischer verlassende Kohlendioxid-haltige Polyolteilstrom befindet sich auf einem Druck, der oberhalb des Lösungsgleichgewichtdrucks des Kohlendioxids in dem Teilstrom liegt. Der wiedervereinigte Polyolstrom wird anschließend auf den Eingangsdruck in das Mischaggregat reduziert, d.h. auf einen Druck, der nur wenig oberhalb des Lösungsgleichgewichtdruckes des Kohlendioxids in dem wiedervereinigten Polyolstrom liegt. Die Druckreduktion kann mittels eines Druckreduktionsventils bzw. Druckhalteventils, das am Eingang des Mischaggregates vorgesehen ist, erfolgen. Sie kann auch dadurch bewirkt werden, daß die Rohrverzweigungsstelle, an der der Kohlendioxid-haltige Teilstrom mit dem restlichen Polyolstrom wiedervereinigt wird, durch ein entsprechend langes Rohrleitungsstück mit dem Eingang des Mischaggregates verbunden ist, wobei in dem Rohrleitungsstück ein ausreichender Druckabfall erfolgt.

Bevorzugt ist jedoch ein Druckhalteventil am Eingang des Mischaggregates.

Die Variabilität des Verfahrens kann dadurch noch erhöht werden, daß zwischen Ausgang des Statikmischers und der Wiedervereinigung der Polyolströme ein zusätzliches Druckhalteventil vorgesehen wird. Hierdurch ist es möglich, über den Statikmischer auch sehr geringe Druckabfälle, z.B. bei Einsatz sehr niedrigviskoser Polyole, zuzulassen, ohne daß der dann am Ausgang des Statikmischers noch herrschende relativ hohe Druck gegen die Dosierpumpen wirkt.

Die Druckerhöhungspumpe, die in dem einen Teilstrom den für die Vermischung mit dem Kohlendioxid erforderlichen Druck erzeugt, kann ohne aufwendige Steuerung, wie sie bei Dosierpumpen erforderlich ist, betrieben werden. Der mittels dieser Pumpe durch den Statikmischer geförderte Teilstrom braucht nicht dosiert zu sein. Er kann in Abhängigkeit von der Viskosität des Polyols, die auch von der Menge des gelösten Kohlendioxids abhängig ist, in gewissen Grenzen schwanken, wobei der andere Teilstrom entsprechend komplementär variabel ist. Aus Gründen der Anlagensicherheit kann ferner in der anderen Teilstromleitung ein Rückschlagventil vorgesehen sein, so daß eine Rückströmung von Kohlendioxid-haltigem Polyol durch diese andere Teilstromleitung sicher vermieden wird.

Zur weiteren Entlastung der aus den Polyolvorratsbehältern fördernden Dosierpumpen kann ferner in der Teilstromleitung für den komplementären Teilstrom eine zusätzliche Druckerhöhungspumpe vorgesehen sein, die den Polyolteilstrom ohne Statikmischer auf ein Druckniveau in der Nähe des Lösungsgleichgewichtdrucks des Kohlendioxids in dem ersten Teilstrom anhebt. Dies erlaubt, die Polyoldosierpumpen im wesentlichen drucklos zu betreiben.

Gegenstand der vorliegenden Erfindung ist auch eine Vorrichtung zur Herstellung von Polyurethan-Schaum, gemäß Anspruch 5.

Die Erfindung wird nachfolgend anhand der Figuren 1 bis 4 näher erläutert.
- Figur 1: zeigt schematisch eine Vorrichtung zur Herstellung von Polyurethan-Schaum in einer ersten Ausführungsform der Erfindung.
- Figur 2, Figur 3 und Figur 4: zeigen alternative Ausführungsformen der Polyolteilstrom-Leitungen.
- Figur 5: zeigt eine weitere Ausführungsform der Erfindung.

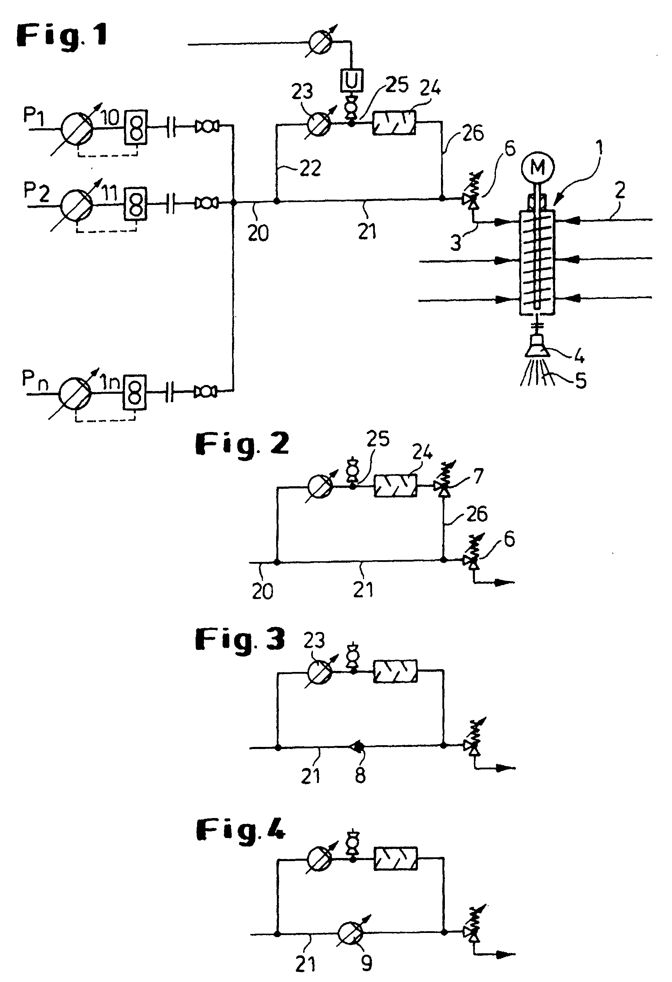

Figur 1 zeigt ein Mischaggregat 1, in das die Isocyanatkomponente 2 und die Kohlendioxid enthaltende Polyolkomponente 3 in dosierten Mengenströmen eingespeist werden. Ferner sind Einspeisungsleitungen für weitere Additive vorgesehen. Unterhalb des Mischaggregates 1 befindet sich das Druckentspannungselement 4, durch das die im Mischaggregat 1 vermischten Komponenten der Polyolreaktivmischung von einem Druck oberhalb des Gleichgewichtlösungsdruckes für das gelöste Kohlendioxid an die Atmosphäre entspannt wird, wobei die aufschäumende Polyurethan-Reaktivmischung 5 austritt. Der Kohlendioxid-haltige Polyolstrom 3, der sich auf einem Druckniveau befindet, das wenig oberhalb des Gleichgewichtlösungsdrucks für das CO₂ in dem Polyol liegt, wird wie folgt bereitgestellt:

Mittels Dosierpumpen 10, 11 ....., 1 n werden aus nicht dargestellten Vorratsbehälter dosierte Polyolströme P1, P2, ..... Pₙ entsprechend dem für die Rezeptur vorgegebenen Mischungsverhältnis in eine gemeinsame Leitung 20 gefördert. Die Leitung 20 verzweigt sich in die Leitungen 21 und 22, wobei sich in der Leitung 22 eine Druckerhöhungspumpe 23 und ein Statikmischer 24 befinden sowie unmittelbar vor dem Statikmischer 24 eine Einspeisungsstelle 25 für einen dosierten Strom flüssigen Kohlendioxids. Die Pumpe 23 stellt vor dem Statikmischer einen Druck von 30 bis 70 bar zur Verfügung, bei dem das flüssige Kohlendioxid ohne zu verdampfen in Lösung geht. Die Druckerhöhungspumpe 23 entnimmt der Leitung 20 so viel Polyol wie erforderlich ist, um vor dem Statikmischer 24 den erforderlichen Druck aufrechtzuerhalten. Die restliche Polyolmenge geht durch Leitung 21. Mittels Druckhalteventil 6 wird in Leitung 26 ein Druck aufrechterhalten, der oberhalb des Gleichgewichtlösungsdruckes für das gelöste CO₂ in dem Teilstrom der Leitung 26 liegt.

In Figur 2 ist ein zusätzliches Druckhalteventil 7 vorgesehen, das es erlaubt, in Leitung 26 den Druck nur wenig oberhalb des Gleichgewichtlösungsdruckes für das in dem Teilstrom gelöste Kohlendioxid zu halten, wobei der Druck am Ausgang des Statikmischers 24 höher gehalten werden kann, so daß an der Einspeisungsstelle für das Kohlendioxid 25 der für die Vermischung erforderliche Druck aufrechterhalten werden kann.

In Figur 3 ist in der Teilstromleitung 21 ein Rückschlagventil 8 vorgesehen, das eine Rückströmung des Kohlendioxid-haltigen Polyols zur Druckpumpe 23 verhindert.

In der Ausführungsform der Erfindung gemäß Figur 4 ist auch in der Teilstromleitung 21 eine Druckerhöhungspumpe 9 vorgesehen, die die Dosierpumpen 10, 11, ..... 1 n (Figur 1) weiter entlastet.

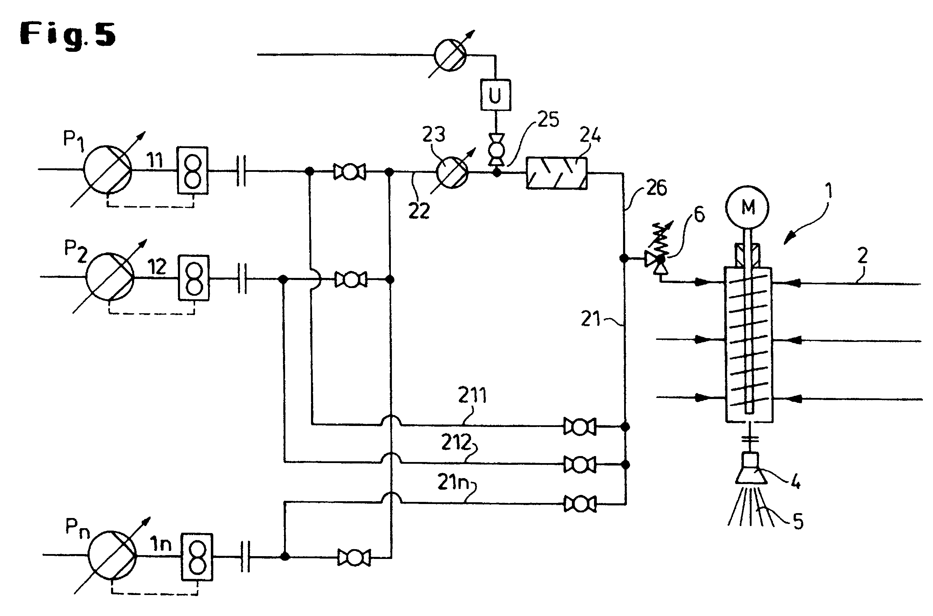

Figur 5 zeigt eine Ausführungsform der Erfindung, die es erlaubt, fiir die Vermischung mit Kohlendioxid einerseits und den Bypass-Polyolstrom andererseits unterschiedliche Polyolzusammensetzungen zur Verfügung zu stellen. Auf diese Weise ist es möglich, die Viskosität des für die Vermischung mit Kohlendioxid vorgesehenen Polyolteilstromes durch Auswahl der Polyole zu beeinflussen. Hierzu ist vorgesehen, daß für jeden Polyolstrom P₁, P₂, ... Pₙ eine getrennte Bypass-Leitung 211, 212, ... 21ₙ vorhanden ist, die durch zusätzliche Ventile abschließbar ist. Im übrigen bezeichnen gleiche Bezugszeichen gleiche Elemente wie in den anderen Figuren.

## Patentansprüche

1. Verfahren zur Bereitstellung eines dosierten Polyolstroms mit dosiertem Gehalt an Kohlendioxid bei einem Druck, der nur wenig oberhalb des Gleichgewichtlösungsdrucks für das gelöste Kohlendioxid liegt, durch Einstellung eines für die Vermischung mit flüssigem Kohlendioxid erforderlichen Drucks, Vermischung von Polyol und Kohlendioxid in einem Statikmischer (24) und Druckreduktion, **dadurch gekennzeichnet, dass** aus einem oder mehreren Polyolvorratsbehältern mittels einer oder mehrerer Dosierpumpen ein oder mehrere dosierte Polyolströme (P1,... Pn) zur Verfügung gestellt werden, aus dem bzw. denen mittels einer bzw. einer gemeinsamen nicht mengenstromgesteuerten Druckerhöhungspumpe (23) ein von der Pumpencharakteristik abhängiger Teilstrom auf das zur Vermischung mit Kohlendioxid erforderliche Druckniveau gebracht, in dem Statikmischer (24) mit einem dosierten Kohlendioxidstrom vermischt, mit einem aus dem restlichen dosierten Polyol bestehenden Teilstrom wiedervereinigt und der Druck reduziert wird.

2. Verfahren nach Anspruch 1, **dadurch gekennzeichnet, daß** der Druck des Kohlendioxid enthaltenden Teilstromes vor der Vereinigung mit dem aus dem restlichen Polyol bestehenden Teilstrom auf einen Druck nahe dem Gleichgewichtlösungsdruck für das gelöste Kohlendioxid reduziert wird.

3. Verfahren nach Anspruch 1 oder 2, **dadurch gekennzeichnet, daß** die dosierten Polyolströme (P1, ...Pn) in einer gemeinsamen Leitung (20) vereinigt werden und aus dem vereinigten Polyolstrom ein von der Pumpencharakteristik abhängiger Teilstrom auf das erforderliche Druckniveau gebracht und nach Vermischung mit dem Kohlendioxid mit dem restlichen Polyolteilstrom wiedervereinigt wird.

4. Verfahren zur Herstellung von Polyurethan-Schaum unter Verwendung von flüssigem Kohlendioxid als Schäummittel durch Zuführung dosierter Isocyanat-, Additiv-, und Polyolströme, wobei der Polyolstrom Kohlendioxid gelöst enthält, zu einem Mischaggregat und Entspannung der Mischung am Auslaß des Mischaggregates von einem Druck oberhalb des Gleichgewichtlösungsdruckes für das gelöste Kohlendioxid unter Freisetzung des Kohlendioxids in an sich bekannter Weise, **dadurch gekennzeichnet, daß** der Kohlendioxid-haltige Polyolstrom nach einem Verfahren gemäß der Ansprüchen 1 bis 3 bereitgestellt wird.

5. Vorrichtung zur Herstellung von Polyurethan-Schaum, enthaltend Vorratsbehälter sowie Förder- und Dosiereinrichtungen für die für die Komponenten Isocyanat, Polyole, Additive und flüssiges Kohlendioxid, eine Mischvorrichtung (24) zum Lösen von Kohlendioxid in dem Polyol, ein Mischaggregat (1) zur Vermischung der Isocyanatkomponente und der Kohlendioxid enthaltenden Polyolkomponente, ein Druckentspannungsventil (4) am Ausgang des Mischaggregats, **dadurch gekennzeichnet, dass** eine Leitung (22) zum Fördern eines Teilstroms aus den dosierten Polyolströmen angeordnet ist, die eine nicht mengenstromgesteuerte Druckerhöhungspumpe (23), eine Einleitvorrichtung (25) für flüssiges Kohlendioxid und einen Statikmischer (24) aufweist, und dass ein Bypass zur Umgehung von Druckerhöhungspumpe (23), Einleitvorrichtung (25) und Statikmischer (24) angeordnet ist, wobei der Bypass für jeden dosierten Polyolstrom eine getrennte Bypass-Leitung (211,..., 21n) und / oder für die vereinigten dosierten Polyolströme eine Bypass-Leitung (21) aufweist.

## Claims

1. A process for preparing a metered polyol stream having a metered carbon dioxide content at a pressure which is only slightly above the solution equilibrium pressure for the dissolved carbon dioxide, by establishing a pressure necessary for mixing with liquid carbon dioxide, mixing polyol and carbon dioxide in a static mixer (24) and pressure reduction, **characterised in that** one or more metered polyol streams (P1, ... Pn) are provided from one or more polyol storage containers by means of one or more metering pumps, a sub-stream, dependent upon pump characteristics, from said polyol streams is adjusted by means of a or a common, non throughput-controlled pressurising pump (23), to the pressure level necessary for mixing with carbon dioxide, is mixed with a metered carbon dioxide stream in the static mixer (24), is recombined with a sub-stream consisting of the remaining metered polyol and the pressure is reduced.

2. A process according to claim 1, **characterised in that** the pressure of the sub-stream containing carbon dioxide is reduced before combination with the sub-stream consisting of the remaining metered polyol to a pressure close to the equilibrium solution pressure for the dissolved carbon dioxide.

3. A process according to claim 1 or 2, **characterised in that** the metered polyol streams (P1, ... Pn) are combined in a common line (20) and a sub-stream, dependent upon pump characteristics, from the combined polyol stream is adjusted to the necessary pressure level and, after mixing with the carbon dioxide, is recombined with the remaining polyol sub-stream.

4. A process for the production of polyurethane foam using liquid carbon dioxide as the foaming agent by introduction of metered streams of isocyanate, additives and polyol, wherein the polyol stream contains dissolved carbon dioxide, into a mixing unit and depressurisation of the mixture on discharge from the mixing unit from a pressure above the equilibrium solution pressure for the dissolved carbon dioxide with release of the carbon dioxide in a manner known *per se,* **characterised in that** the polyol stream containing carbon dioxide is prepared according to a process according to claims 1 to 3.

5. An apparatus for the production of polyurethane foam containing storage containers as well as delivery and metering devices for the components isocyanate, polyols, additives and liquid carbon dioxide, a mixing apparatus (24) for dissolving carbon dioxide in the polyol, a mixing unit (1) for mixing the isocyanate component and the polyol component containing carbon dioxide, a pressure reduction valve (4) at the mixing unit outlet, **characterised in that** a line (22) is arranged for delivering a sub-stream from the metered polyol streams, which line (22) comprises a non throughput-controlled pressurising pump (23), a feed apparatus (25) for liquid carbon dioxide and a static mixer (24), and **in that** a bypass is arranged to bypass the pressurising pump (23), feed apparatus (25) and static mixer (24), wherein the bypass for each metered polyol stream has a separate bypass line (211, ..., 21n) and/or a bypass line (21) for the combined metered polyol streams.

## Revendications

1. Procédé pour préparer un courant de polyol dosé comportant une teneur dosée en gaz carbonique à une pression qui est seulement légèrement supérieure à la pression d'équilibre en solution pour le gaz carbonique dissous, par réglage d'une pression nécessaire pour le mélange avec du gaz carbonique, mélange du polyol et du gaz carbonique dans un mélangeur statique (24) et réduction de la pression, **caractérisé en ce qu'**à partir d'un ou plusieurs des réservoirs de polyols sont délivrés au moyen d'une ou de plusieurs pompes de dosage, un ou plusieurs courants dosés de polyols (P1, ... Pn), à partir du ou desquels un courant partiel dépendant de la caractéristique de la pompe est amené au niveau de pression requis pour le mélange avec le gaz carbonique, à l'aide d'une pompe d'accroissement de pression ou d'une pompe d'accroissement de pression commune (23) dont le courant quantitatif n'est pas commandé, est mélangé dans le mélangeur statique (24) à un courant de gaz carbonique dosé, est à nouveau réuni à un courant partiel constitué par le polyol résiduel dosé et la pression est réduite.

2. Procédé selon la revendication 1, **caractérisé en ce que** la pression du courant partiel contenant du gaz carbonique est réduite avant la réunion au courant partiel constitué par le polyol résiduel, à une pression proche de la pression d'équilibre en solution pour le gaz carbonique dissous.

3. Procédé selon la revendication 1 ou 2, **caractérisé en ce que** les courants de polyols dosés (P1, ... Pn) sont réunis dans une canalisation commune (20), et, un courant partiel, qui dépend de la caractéristique de la pompe, tiré du courant de polyols réuni est amené au niveau de pression nécessaire et est à nouveau réuni, après mélange avec le gaz carbonique, au courant partiel de polyol résiduel.

4. Procédé pour fabriquer une mousse de polyuréthane en utilisant du gaz carbonique liquide en tant qu'agent moussant, par amenée de courants dosés d'isocyanate, d'un additif et de polyols, le courant de polyols contenant du gaz carbonique à l'état dissous, à une unité de mélange et par détente du mélange à la sortie de l'appareil mélangeur à partir d'une pression supérieure à la pression d'équilibre en solution pour le gaz carbonique dissous moyennant la libération du gaz carbonique de façon connue en soi, **caractérisé en ce que** le courant de polyols contenant du gaz carbonique est préparé selon un procédé conforme aux revendications 1 à 3.

5. Dispositif pour fabriquer une mousse de polyuréthane, contenant des réservoirs ainsi que des dispositifs d'entraînement et de dosage pour les composants: isocyanate, polyols, additifs et gaz carbonique liquide, un dispositif mélangeur (24) pour dissoudre le gaz carbonique dans le polyol, une unité de mélange (1) servant à mélanger le composant isocyanate et le composant polyol contenant du gaz carbonique, et une soupape de détente de pression (4) située à la sortie de l'unité de mélange, **caractérisé en ce qu'**il est prévu une canalisation (22) servant à entraîner un courant partiel à partir des courants dosés de polyols et qui comporte une pompe d'accroissement de pression (23), dont le courant quantitatif n'est pas commandé, un dispositif d'introduction (25) pour le gaz carbonique liquide et un mélangeur statique (24), et qu'il est prévu un by-pass pour contourner la pompe d'accroissement de pression (23), le dispositif d'introduction (25) et le mélangeur statique (24), le by-pass comportant pour chaque courant de polyol dosé, une canalisation de by-pass séparée (211, ..., 21n) et/ou pour les courants de polyols dosés réunis, une canalisation de by-pass (21).
